Europäisches Patentamt

European Patent Office

Office européen des brevets

(11) Veröffentlichungsnummer: **0 279 888**
A2

# EUROPÄISCHE PATENTANMELDUNG

(21) Anmeldenummer: 87105929.1

(22) Anmeldetag: 23.04.87

(51) Int. Cl.⁴: **F16H 57/02** , F16H 57/04 , B60K 17/16

(30) Priorität: 21.02.87 DE 3705607

(43) Veröffentlichungstag der Anmeldung:
31.08.88 Patentblatt 88/35

(84) Benannte Vertragsstaaten:
DE ES FR GB IT NL SE

(71) Anmelder: Dr.Ing.h.c. F. Porsche
Aktiengesellschaft
Porschestrasse 42
D-7000 Stuttgart 40(DE)

(72) Erfinder: Hoebel, Peter, Dipl.-Ing.
Waldenserstrasse 15
D-7135 Wlenshelm-Serres(DE)

(54) Lagerung eines Achsantrieb Kegelritzels.

(57) Die Ritzelwelle eines mit einem Tellerrad kämmenden Achsantrieb-Kegelritzels ist in zwei Kegelrolenlagern gelagert, deren gemeinsamer Außenring am Achsgehäuse angeflanscht ist. Um die Kegelrollenlager mit Spritzöl zu schmieren und Schmutzablagerungen im Lagerbereich zu vermeiden, besitzt der Außenring der Kegelrollenlager einen Ölzulaufkanal zu einem oberhalb angeordneten Auffangrohr und an seiner Unterseite einen Ölrücklaufkanal zur Getriebeölwanne.

FIG.2

EP 0 279 888 A2

## Lagerung eines Achsantrieb-Kegelritzels

Die Erfindung betrifft die Lagerung und Schmierung eines Achsantrieb-Kegelritzels eines Kraftfahrzeugs nach dem Oberbegriff des Anspruchs 1.

Eine derartige Lagerung ist aus US-PS 4 319 499 bekannt. Um den Kegelrollenlagern Spritzöl in ausreichender Menge zuführen zu können, ist das sie aufnehmende Lagerauge oben an seiner Außenfläche als Auffangschale für Spritzöl ausgebildet. Von dort geht ein Ölkanal nach abwärts und endet mittig zwischen den beiden Kegelrollenlagern. Nachteilig ist dabei, daß eventuelle Verunreinigungen und Schmutzpartikel des Spritzöls nicht aus dem Lagerbereich abfließen können und sich an den Kegelrollenlagern ansammeln.

Es ist die Aufgabe der Erfindung, die Lagerung und Schmierung eines Achsantrieb-Kegelritzels mit konstruktiv einfachen Mitteln so zu gestalten, daß ein ständiger Öldurchfluß durch die Lagerung gewährleistet ist.

Eine Lösung dieser Aufgabe gelingt mit den kennzeichnenden Merkmalen des Anspruchs 1. Wenn der Außenring der Kegelrollenlager an seiner Unterseite einen Ölrücklaufkanal zur Getriebeölwanne enthält, kann das an seiner Oberseite zufließende Spritzöl kontinuierlich unten abfließen und es können sich keine Ölrückstände an den Kegelrollenlagern ansammeln. Der durch Schwerkraft erfolgende Ölzufluß wird durch die an den Kegelrollenlagern hervorgerufene Zentrifugalkraft begünstigt. Als Sammelbehälter für das Spritzöl dient ein Auffangrohr, das oberhalb der Kegelrollenlager in das Achsgehäuse eingesetzt ist. Es ragt mit einem nach unten abgeschrägten Mundstück aus der Wand des Achsgehäuses heraus. Es nimmt das and der Innenwand des Achsgehäuses herabfließende Spritzöl auf und leitet es durch eine untere Öffnung hindurch zu einem Ölkanal in der Gehäusewand, der mit einem abwärtsgerichteten Ölzuführungskanal des Außenrings der Kegelrollenlager fluchtet.

Die exakte Zuordnung der Gehäusekanäle zu den Ölkanälen des Außenrings ist dadurch sichergestellt, daß der Außenring an das Gehäuse angeflanscht ist und so nach Montage in axialer Richtung und in Umfangsrichtung gegenüber dem Gehäuse eine festgelegte Lage einnimmt.

Vor dem Anflanschen des Aubenrings am Gehäuse wird in ihm das Kegelritzel mit beiden Kegelrollenlagern vormontiert, wobei die Innenringe der Kegelrollenlager gegen das Kegelritzel durch eine auf die Ritzelwelle geschraubte Mutter vorgespannt sind und die Kegelrollen unter Aufhebung des Radialspiels an die inneren Laufflächen des Außenrings angelegt sind. Diese kompakte Baueinheit wird in das Gehäuse eingesetzt. Das Zahnspiel des Kegelritzels zum Tellerrad ist durch eine Einstellscheibe einer bestimmten Scheibenstärke, die zwischen dem Gehäuse und dem Flansch des Außenrings eingelgt wird, einstellbar.

Ein Ausführungsbeispiel der Erfindung ist in der Zeichnung dargestellt und wird nachfolgend erläutert.

Es zeigt

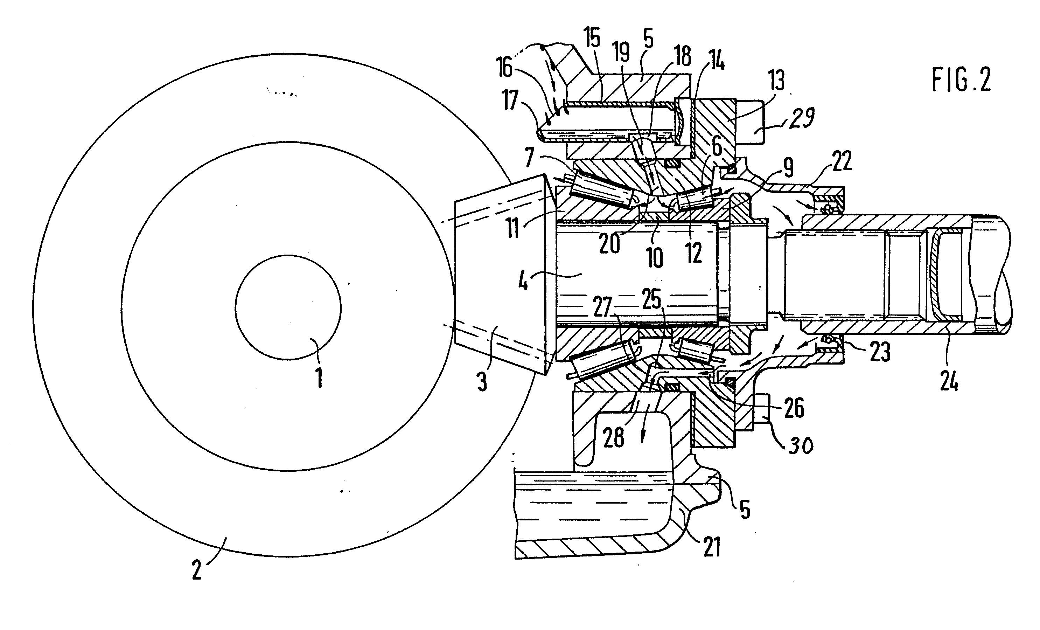

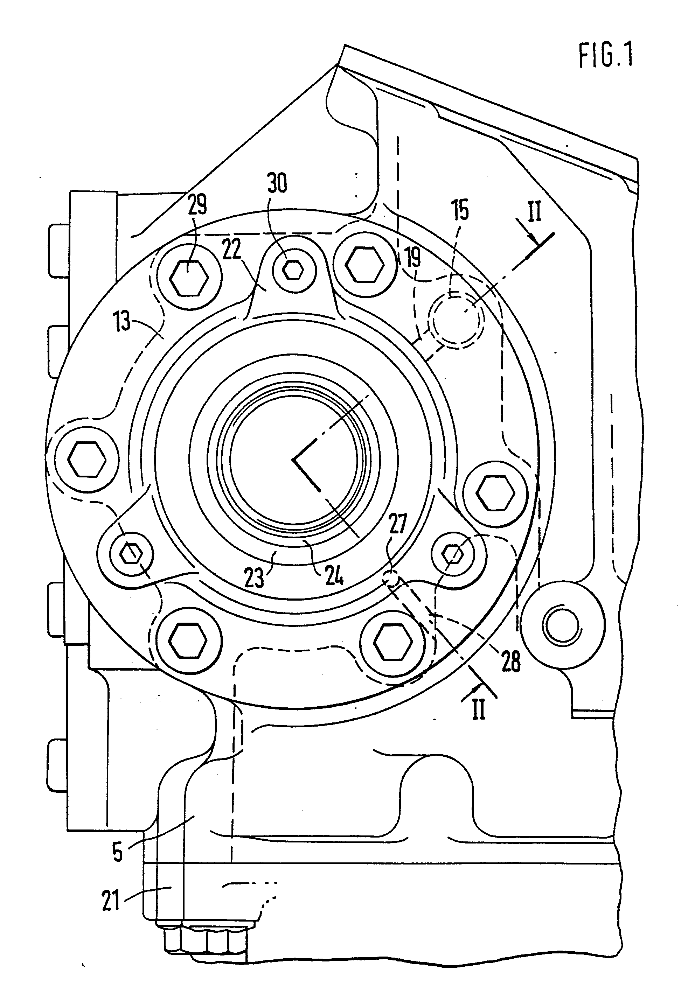

Fig. 1 eine Vorderansicht eines Achsgetriebegehäuses,

Fig. 2 einen Längsschnitt durch die Lagerung des Kegelritzels nach Linie II-II der Fig. 1.

Ein Achsantrieb eines Kraftfahrzeugs besteht aus einem, auf einer Fahrzeugachse 1 angebrachten Tellerrad 2 und einem mit ihm kämmenden Kegelritzel 3, dessen Ritzelwelle 4 in Fahrzeuglängsrichtung in einem Achsgehäuse 5 in Kegelrollenlagern 6 und 7 gelagert ist. Mit einer auf die Ritzelwelle 4 geshraubten Mutter 8 wird ein Innenring 9 des Kegelrollenlagers 6, ein Distanzring 10 und ein Innenring 11 des Kegelrollenlagers 7 gegen das Kegelritzel 3 verspannt. Zugleich werden dabei die Kegelrollen der Kegelrolenlager 6 und 7 gegen konische, innere Laufflächen eines für beide Kegelrollenlager 6 und 7 gemeinsamen Außenrings 12 angelegt. Der komplette, vormontierte Verband aus Ritzelwelle 4, Kegelrollenlagern 6 und 7 sowie Außenring 12 ist so in eine Paßbohrung des Achsgehäuses 5 eingesetzt und mit einem Flansch 13 des Außenrings 17 am Achsgehäuse 5 angeflanscht.

Zwischen das Achsgehäuse 5 und den Flansch 13 ist eine Einstellscheibe 14 solcher Scheibenstärke eingelgt, daß sich ein optimales Flankenspiel an der Verzahnung Kegelritzel 3 - Tellerrad 2 ergibt.

Oberhalb der Kegelrollenlager 6 und 7 ist ein zur Ritzelwelle paralleles Auffangrohr 15 für Spritzöl in eine zur Ritzelwelle 4 parallele Gehäusebohrung eingepreßt. Mit einem aus der Wand des Achsgehäuses 5 herausragenden Mundstück 16, das an seiner unterseite eine nach oben gebogene Auffangrinne 17 aufweist, wird Spritzöl aufgefangen und über eine Öffnung 18 zu einer Gehäusebohrung 19 geleitet, die mit einem in die Oberseite des Außenrings 12 gebohrten Ölzuführungskanal 20 fluchtet. Der Ölzuführungskanal 20 endet mittig zwischen den Kegelrollenlagern 6 und 7. Der eine Teil des Spritzöls fließt zu dem ritzelseitigen, größeren Kegelrollenlager 7 und wird von ihm zur Getriebeölwanne gefördert. Der andere Teil des Spritzöls durchströmt das kleinere Kegelrolenlager 6, sammelt sich im unteren Bereich des Außenrings 12 und in der an ihn angeflanschten Dichtungshülse 22, deren Lipendichtung 23 gegen eine auf der Ritzelwelle 4 befestigte Kupplungsmuffe 24 abdichtet. An der Untersiete enthält der Außenring 12 einen Ölrücklaufkanal 25, der aus einem parallel zur Ritzelwelle verlaufenden Teilstück 26 und einem sich daran anschließenden, radial zum Außenring 12 verlaufenden Teilstück 27 besteht, das zu einer unteren Gehäusebohrung 28 fluchtet. Über den Ölrücklaufkanal 25 läuft das Spritzöl zu der Getriebeölwanne 21 zurück. Der Flansch 13 des Außenrings 12 ist am Achsgehäuse mit Schrauben 29, die Dichtungshülse 22 am Flansch 13 mit Schrauben 30 befestigt.

Der Ölrücklaufkanal 25 ist am Außenring 12 in einer solchen Höhe angebracht, daß sich ein die unteren Kegelrollen ständig benetzender Ölstand ergibt und daß Schmutzpartikel durch ihn hindurch ständig weggeschwemmt und in die Ölwanne befördert werden.

## Ansprüche

1. Lagerung eines Achsantrieb-Kegelritzels eines Kraftfahrzeugs, mit zwei Kegelrollenlagern, die über einen zwischen ihnen angeordneten Ölzulaufkanal mit Spritzöl geschmiert sind, das in einem oberhalb der Kegelrollenlager liegenden Auffangbehälter gesammelt wird, dadurch gekennzeichnet, daß die beiden Kegelrollenlager (6, 7) einen gemeinsamen Außenring (12) haben, der an seiner Oberseite den Ölzulaufkanal (20) und an seiner Unterseite einen mit der Getriebeölwanne (21) in Verbindung stehenden Ölrücklaufkanal (25) enthält.

2. Lagerung nach Anspruch 1, dadurch gekennzeichnet, daß der Ölzulaufkanal (20) mit einem oberhalb der Kegelrollenlager (6, 7) in eine Bohrung des Achsgehäuses (5) eingesetzten Auffangrohr (15) für Spritzöl in Verbindung steht.

3. Lagerung nach Anspruch 2, dadurch gekennzeichnet, daß das Auffangrohr (15) parallel zur Ritzelwelle (4) des Kegelritzels (3) liegt.

4. Lagerung nach Anspruch 2 und 3, dadurch gekennzeichnet, daß das Auffangrohr (15) ein aus der Wand des Achsehäuses (5) herausragendes, abgeschrägtes, sich nach unten verlängerndes und an seiner Unterseite nach oben umgebogenes Mundstück (16) aufweist.

5. Lagerung nach Anspruch 1, dadurch gekennzeichnet, daß der Ölrücklaufkanal (25) aus einem parallel zur Ritzelwelle (4) verlaufenden Teilstück (26) und einem sich daran anschließenden, etwa radial zum Außenring (12) verlaufenden Teilstück (27) besteht, das über eine dazu fluchtende Bohrung (28) des Achsgehäuses (5) and die Getriebeölwanne (21) angeschlossen ist.

6. Lagerung nach Anspruch 1, dadurch gekennzeichnet, daß der Sitzdurchmesser des Außenrings (12) im Achsgehäuse (5) größer ist als der größte Durchmesser des Kegelritzels (3).

7. Lagerung nach Anspruch 6, dadurch gekennzeichnet, daß der Außenring (12) an das Achsgehäuse (5) angeflanscht ist und daß die Innenringe (9, 11) der Kegelrollenlager (6, 7) mit einer auf die Ritzelwelle (4) geschraubten Mutter (8) axial gegen das Kegelritzel (3) verspannt sind und somit auch die Kegelrollen spielfrei an die Laufflächen des Außenrings (12) angelegt sind.

FIG.2

0 279 888

AB 672

FIG.1